(19) Europäisches Patentamt
European Patent Office
Office européen des brevets

(11) **EP 1 563 629 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **03767404.1**

(22) Anmeldetag: **06.11.2003**

(51) Int Cl.:
***H04L 1/00*** *(2006.01)*

(86) Internationale Anmeldenummer:
**PCT/DE2003/003691**

(87) Internationale Veröffentlichungsnummer:
**WO 2004/045131 (27.05.2004 Gazette 2004/22)**

# (54) VERFAHREN ZUR SIGNATURBILDUNG UND ÜBERTRAGUNG VON DATEN

METHOD FOR SIGNATURE FORMING AND DATA TRANSMISSION

PROCEDE DE FORMATION D'UNE SIGNATURE ET TRANSMISSION DE DONNEES

(84) Benannte Vertragsstaaten:
**DE ES FR GB IT**

(30) Priorität: **11.11.2002 DE 10252230**

(43) Veröffentlichungstag der Anmeldung:
**17.08.2005 Patentblatt 2005/33**

(73) Patentinhaber: **ROBERT BOSCH GMBH**
**70442 Stuttgart (DE)**

(72) Erfinder:
- **ZARGA, Heikel**
  **24943 Flensburg (DE)**
- **BOEHL, Eberhard**
  **72768 Reutlingen (DE)**
- **HARTER, Werner**
  **75428 Illingen (DE)**

(56) Entgegenhaltungen:
**WO-A-02/35708** **US-A- 5 428 629**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 563 629 B1

Printed by Jouve, 75001 PARIS (FR)

## Beschreibung

Die vorliegende Erfindung betrifft ein Verfahren zur Übertragung von Daten, bei dem nach einem vorgebbaren Signaturbildungsverfahren eine erste Signatur in Abhängigkeit der zu übertragenden Daten gebildet wird. Die erste Signatur wird zusammen mit den Daten in sogenannten Botschaften übertragen. Nach dem Signaturbildungsverfahren wird eine zweite Signatur in Abhängigkeit von den übertragenen Daten gebildet und die erste Signatur mit der zweiten Signatur zum Zwecke einer Signaturanalyse verglichen.

Die Erfindung betrifft außerdem ein Computerprogramm, das auf einem Steuergerät, insbesondere auf einer Recheneinheit ablauffähig ist.

Schließlich betrifft die vorliegende Erfindung auch ein Steuergerät für ein Kraftfahrzeug. Das Steuergerät umfasst eine Recheneinheit, die insbesondere als ein Mikroprozessor ausgebildet ist, und ein Speicherelement, das insbesondere als ein Schreib-Lese-Speicher mit wahlfreiem Zugriff (RAM), als ein Nur-Lese-Speicher (ROM) oder als ein Flash-Speicher (Flash-Memory) ausgebildet ist. Auf dem Speicherelement ist ein Computerprogramm abgelegt, das auf der Recheneinheit ablauffähig ist.

Stand der Technik

Aus dem Stand der Technik ist die Signaturanalyse als eine Methode zur Datenkomprimierung bekannt, die auf der sogenannten CRC (Cyclic Redundancy Check)-Methode basiert. In Abhängigkeit der zu übertragenden Daten wird nach einem vorgebbaren Signaturbildungsverfahren ein resultierendes Datenwort gebildet, welches die Signatur darstellt und den komprimierten Datenstrom charakterisiert. Die Wahrscheinlichkeit, dass trotz Fehlern in dem Datenstrom eine richtige Signatur gebildet wird, ist sehr gering und nimmt mit der Datenbreite des Signaturwortes ab. Signaturen werden beispielsweise eingesetzt für die Sicherung von Datenübertragungen, zur Überwachung von Festwertspeichern von Computern und zur Identifizierung von Datenströmen, wie zum Beispiel von digitalen Hardware-Signalen im Rahmen eines Tests von Schaltungen oder von Daten, die ein Schriftstück enthält. Zum Stand der Technik wird verwiesen auf Abramovici, Miron, et al.: Digital Systems Testing and Testable Design, New York, IEEE Press, 1990.

In Hardware wird die Signatur üblicherweise sequentiell Bit für Bit mit Hilfe eines linear rückgekoppelten Schieberegisters (LFSR; Linear Feedback Shift Register) gebildet. Es ist bekannt, dieses sequentielle Signaturanalyse-Verfahren auch in Software zu realisieren. Dieses Verfahren ist aber wegen der sequentiellen Arbeitsweise entweder sehr langsam oder braucht relativ viel Speicherplatz für Tabellen (sogenannte Lookup-Tables), um die Berechnungszeit zu verkürzen. Zum Stand der Technik von solchen softwaremäßig realisierten sequentiellen Verfahren zur Signaturanalyse wird auf Williams, R. N.: A Painless Guide to CRC Error Detection Algorithms, Version 3, 19.08.1993, Rocksoft Pty Ltd., Hazelwood Park 5066, Australia, ftp://ftp.rocksoft.com/papers/crc_v3.txt verwiesen.

Des weiteren ist ein Verfahren zur Signaturbildung mit einer parallelen Arbeitsweise (Datenwort für Datenwort) bekannt. Dieses bekannte Verfahren arbeitet beispielsweise mit Hilfe eines Signaturregisters mit mehreren Eingängen (MISR; Multiple Input Shift Register). Durch die parallele Arbeitsweise können zum Beispiel mit einem 32 Bit-Prozessor 32 Bit Eingangsdaten in einem Schritt verarbeitet werden. Ein derartiges Verfahren ist beispielsweise aus der US 5,938,784 bekannt.

Gerade für Sicherheitsanwendungen in einem Kraftfahrzeug, wie beispielsweise Steer-by-Wire oder autonomes Fahren, werden fehlertolerante und damit redundante Elektroniksysteme eingesetzt, die einen hohen Bedarf an sicherem Datenaustausch zwischen Systemen, Steuergeräten, Rechnern und/oder Recheneinheiten haben. Diese Kommunikation kann in drei Kommunikationsebenen erfolgen. Eine System-Kommunikation zwischen zwei oder mehr Steuergeräten erfolgt bspw. über ein Bussystemen, wie beispielsweise CAN (Controller Area Network), TTCAN (Time Triggered CAN), FlexRay oder TTP/C (Time Triggered Protocol Class C). Eine Steuergeräte-Steuergeräte-Kommunikation bzw. eine Rechner-Rechner-Kommunikation, an der zwei Steuergeräte bzw. Rechner beteiligt sind, erfolgt über Schnittstellen, wie beispielsweise RS232, RS422, SPI (Serial Peripheral Interface) oder SCI (Serial Communications Interface). Eine Recheneinheit-Recheneinheit-Kommunikation erfolgt innerhalb eines Steuergerätes. Da bei diesen Systemen neben der Rechenzeit die Datenkommunikationszeit einen Engpass darstellt, ist eine Verwendung des MISR-Verfahren zur Absicherung der vielen Datenkommunikationen von besonderem Vorteil. Es reduziert die erforderliche Rechenzeit zur Absicherung der Datenkommunikation bei Sender und Empfänger auf ein Minimum.

Bei den bekannten Verfahren kann es - wenn auch äußerst selten - vorkommen dass trotz fehlerhafter Daten innerhalb einer Botschaft eine fehlerfreie Signatur gebildet wird. Das heißt, dass die zu übertragenden Daten und die übertragenen Daten zwar nicht miteinander übereinstimmen, aber dennoch die erste Signatur, welche über die zu übertragenden Daten gebildet wurde, und die zweite Signatur, welche über die übertragenen Daten gebildet wurde, übereinstimmen. Dies wird als Fehlermaskierung bezeichnet.

Das Dokument WO 02/35708 (2002-05-02) beschreibt eine Übertragung von Daten, wobei eine Signatur in Abhängigkeit der zu übertragenden Daten gebildet wird.

Der vorliegenden Erfindung liegt die Aufgabe zu Grunde, bei der Überwachung der Übertragung von Daten ein Verfahren bereit zu stellen, das eine schnelle Bildung einer Signatur erlaubt und die Fehlermaskierungswahrscheinlichkeit reduziert.

Zur Lösung dieser Aufgabe schlägt die vorliegende Erfindung ausgehend von dem Verfahren der eingangs genannten Art vor, dass die zu übertragenden Daten invertiert werden, nach dem vorgebbaren Signaturbildungsverfahren in Abhängigkeit der Daten und der invertierten Daten die erste Signatur gebildet wird, die erste Signatur und die Daten übertragen werden, die übertragenen Daten invertiert werden, in Abhängigkeit dieser invertierten Daten und der übertragenen Daten nach dem Signaturbildungsverfahren die zweite Signatur gebildet wird und die erste Signatur mit der zweiten Signatur verglichen wird.

Vorteile der Erfindung

Erfindungsgemäß wird die Signatur nicht nur über die zu übertragenden bzw. übertragenen Daten, sondern auch über die invertierten Daten gebildet. Durch die zusätzliche Verarbeitung der invertierten Daten kann die Fehlermaskierungswahrscheinlichkeit deutlich reduziert werden. Der zusätzliche Aufwand für die Verarbeitung der invertierten Daten ist gering, so dass nach wie vor kurze Rechenzeiten erzielt werden können. Das erfindungsgemäße Verfahren eignet sich deshalb insbesondere zur Anwendung in Sicherheitsanwendungen in einem Kraftfahrzeug.

Das erfindungsgemäße Verfahren kann sowohl hardwaremäßig als auch softwaremäßig realisiert sein. Die softwaremäßige Realisierung hat den Vorteil geringerer Kosten und eines geringeren Gewichtes, da keine Hardware-Bauteile für die Schaltung erforderlich sind. Außerdem bringt eine softwaremäßige Realisierung eine größere Flexibilität (kann ohne großen Aufwand umprogrammiert und an neue Anforderungen angepasst werden).

Gemäß einer vorteilhaften Weiterbildung der Erfindung wird vorgeschlagen, dass mittels eines Signaturregisters mit mehreren Eingängen (MISR; Multiple Input Shift Register) die erste Signatur und/oder die zweite Signatur bit-parallel (wortweise) gebildet werden. Dadurch wird die Geschwindigkeit der Signaturbildung erhöht.

In einer bevorzugten Ausführungsform der Erfindung werden die erste Signatur und/oder die zweite Signatur über die Daten mehrerer Botschaften gebildet. Es werden also nicht die Daten jeder übertragene Botschaft mit einer eigenen Signatur individuell abgesichert, sondern es werden die Daten mehrerer Botschaften gemeinsam abgesichert. Damit wird erreicht, dass das Datenvolumen der für die Signaturanalyse zu übertragenden Daten reduziert wird.

Dabei wird vorteilhafterweise eine Signatur auf mehrere Botschaften verteilt übertragen. Diese sogenannte Methode der verteilten Signaturübertragung bei der die gemeinsame Signatur auf die Botschaften verteilt wird, die die abzusichernden Daten enthalten, stellt eine zusätzliche Möglichkeit zur Reduzierung des zu übertragenden Datenvolumens dar. Ein Steuergerät überträgt beispielsweise auf einem CAN-Bus pro Systemzyklus drei Botschaften mit je maximal acht Byte, die jeweils mit einer 32 Bit-Signatur abgesichert werden sollen. Wenn die Daten bei der Empfangseinheit erst nach dem Empfang aller drei Botschaften weiterverarbeitet werden, macht es Sinn, die Daten der Botschaften nicht einzeln mit 32 Bit, sondern gemeinsam mit 32 Bit abzusichern und die 32 Bit (gleich vier Byte) Signaturdaten derart zu verteilen, dass die Botschaften optimal mit Daten ausgelastet sind. Hierdurch wird einerseits Datenvolumen für die Datenübertragung reduziert (vier Byte Signatur anstatt 12 Byte Signatur) und andererseits ist die übertragene Signatur nicht so anfällig gegen eine Datenverfälschung (Maskierung) durch eine Störung, da die Signatur nicht als ein Block, sondern als drei Teilblöcke zusammen mit den einzelnen Datenworten zu unterschiedlichen Zeitpunkten übertragen wird.

Bei sicherheitsrelevanten Systemen wie Steer-by-Wire, autonomes Fahren, automatische Spurführung sowie Systemen zur Fahrdynamikregelung über ein Verbundsystem aus Bremse, Lenkung, Fahrwerk und so weiter, werden aus Sicherheitsgründen Mehrrechnersysteme eingesetzt. Dabei werden zwei, drei oder vier Recheneinheiten pro Steuergerät eingesetzt. Bei Flugzeugen und in der Raumfahrt können sogar Systeme mit fünf und mehr Recheneinheiten pro Steuergerät eingesetzt werden. Ein Grundprinzip dieser Mehrrechnersysteme ist, dass vor Beginn von Berechnungen alle Eingangsdaten unter den Recheneinheiten ausgetauscht und danach die Startdaten für die Berechnung bitgenau abgestimmt werden (sogenanntes Eingangsvoting). Die Berechnungsergebnisse werden ebenfalls zwischen allen Recheneinheiten ausgetauscht und auf Bitgenauigkeit verglichen (sogenanntes Ausgangsvoting).

Sind die zu übertragenden Daten bitgenaue Eingangsdaten, die beispielsweise in Botschaften über Datenbusse zu den Recheneinheiten gelangen oder Berechnungsergebnisse, die parallel auf mehreren Rechnern redundant erzeugt werden, so werden vorzugsweise zur Überprüfung einer Übereinstimmung dieser Daten lediglich die entsprechenden Signaturen übertragen.

Insbesondere unter Einsatz des besonders schnellen und zuverlässigen erfindungsgemäßen Verfahrens zur Signaturbildung kann damit das zu übertragende Datenvolumen reduziert und eine Verarbeitungsgeschwindigkeit erhöht werden.

Vorteilhafterweise wird das erfindungsgemäße Verfahren zur Überprüfung des Speicherinhaltes eines Nur-Lese-Speichers, Flash-Speichers oder eines Schreib-Lese-Speichers verwendet. Dies ermöglicht ein effizientes Überprüfen der Datenkonsistenz des Speicherinhaltes.

Vorzugsweise werden bei dieser erfindungsgemäßen Verwendung die Daten des zu überprüfenden Speicherinhaltes invertiert, nach dem vorgebbaren Signaturbildungsverfahren in Abhängigkeit der zu überprüfenden Daten und der invertierten Daten die erste Signatur gebildet und in einem Speicherbereich eines Nur-Lese-Speichers, Flash-Speichers oder eines Schreib-Lese-Speichers als eine Sollsignatur abgespeichert. Für eine Überprüfung der sich in dem zu überprüfenden Speicherbereich befindlichen Daten, werden diese Daten invertiert, in Abhängigkeit dieser invertierten Daten und der Daten nach dem Signaturbildungsverfahren die zweite Signatur gebildet und mit der abgespeicherten Sollsignatur verglichen. Es wird also eine erste Signatur, die sogenannte Sollsignatur, über einen zu überprüfenden Speicherinhalt einmalig erzeugt und abgespeichert. Soll dieser Speicherinhalt dann beispielsweise zu einem späteren Zeitpunkt überprüft werden, so wird über den aktuellen Speicherinhalt eine zweite Signatur erzeugt und mit der abgespeicherten Sollsignatur verglichen. Stimmen diese Signaturen nicht überein, kann davon ausgegangen werden, dass sich der Inhalt des zu überwachenden Speicherbereiches verändert hat. Dies erlaubt eine besonders effiziente Überprüfung eines Speicherbereiches auf Datenkonsistenz, da zu einer Überprüfung der Daten lediglich die Signaturen verglichen werden müssen. Außerdem muss die Sollsignatur nur einmal gebildet werden.

Von besonderer Bedeutung ist die Realisierung des erfindungsgemäßen Verfahrens in der Form eines Computerprogramms. Dabei ist das Computerprogramm auf einem Steuergerät, insbesondere auf einer Recheneinheit ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm geeignet ist. Das Computerprogramm ist vorzugsweise auf einem Speicherelement abgespeichert. Als Speicherelement kann insbesondere ein elektrisches Speichermedium zur Anwendung kommen, beispielsweise ein Schreib-Lese-Speicher mit wahlfreiem Zugriff (RAM; Random-Access-Memory), ein Nur-Lese-Speicher (ROM; Read-Only-Memory) oder ein Flash-Speicher (Flash-Memory).

Als eine weitere Lösung der Aufgabe der vorliegenden Erfindung wird ausgehend von dem Steuergerät der eingangs genannten Art vorgeschlagen, dass das Steuergerät zur Ausführung des erfindungsgemäßen Verfahrens geeignet ist, wenn das Computerprogramm auf dem Steuergerät, insbesondere auf einer von dem Steuergerät umfassten Recheneinheit, abläuft.

Zeichnungen

Weitere Merkmale, Anwendungsmöglichkeiten und Vorteile der Erfindung ergeben sich aus der nachfolgenden Beschreibung von Ausführungsbeispielen der Erfindung, die in den Zeichnungen dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüche oder deren Rückbeziehung sowie unabhängig von ihrer Formulierung beziehungsweise Darstellung in der Beschreibung beziehungsweise in den Zeichnungen. Es zeigen:

Figur 1 ein erfindungsgemäßes Steuergerät gemäß einer bevorzugten Ausführungsform zur Steuerung und/oder Regelung einer Sicherheitsanwendung in einem Kraftfahrzeug;

Figur 2 ein Ablaufdiagramm eines erfindungsgemäßen Verfahrens zur Signaturanalyse;

Figur 3 ein Steer-by-Wire System mit zwei Steuergeräten;

Figur 4 ein Rechnersystem, das zur Abarbeitung einer in Software realisierten Ausführungsform des erfindungsgemäßen Verfahrens geeignet ist;

Figur 5 ein Ablaufdiagramm eines erfindungsgemäßen Signaturbildungsverfahrens gemäß einer bevorzugten Ausführungsform;

Figur 6 Funktionsprinzip des MISR-Verfahrens zur Signaturbildung in Hardware; und

Figur 7 Funktionsprinzip des MISR-Verfahrens zur Signaturbildung unter Verwendung von EX-OR-Operatoren.

Beschreibung der Ausführungsbeispiele

Aus dem Stand der Technik ist die Signaturanalyse als eine Methode zur Datenkomprimierung bekannt, die auf der sogenannten CRC (Cyclic Redundancy Check)-Methode basiert. In Abhängigkeit der zu übertragenden Daten wird nach einem vorgebbaren Signaturbildungsverfahren ein resultierendes Datenwort gebildet, welches die Signatur darstellt und den komprimierten Datenstrom charakterisiert. Die Wahrscheinlichkeit, dass trotz Fehlern in dem Datenstrom die richtige Signatur gebildet wird, ist sehr gering und nimmt mit der Datenbreite des Signaturwortes ab. Signaturen werden beispielsweise eingesetzt für die Sicherung von Datenübertragungen, zur Überwachung von Festwertspeichern von Computern und zur Identifizierung von Datenströmen, wie zum Beispiel von digitalen Hardware-Signalen im Rahmen eines Tests von Schaltungen oder von Daten, die ein Schriftstück enthält.

In Hardware wird die Signatur üblicherweise sequentiell Bit für Bit mit Hilfe eines linear rückgekoppelten Schieberegisters (LFSR; Linear Feedback Shift Register) gebildet. Es ist bekannt, dieses sequentielle Signaturanalyse-Verfahren auch in Software zu realisieren. Dieses Verfahren ist aber wegen der sequentiellen Arbeitsweise entweder sehr langsam oder braucht relativ viel Speicherplatz für Tabellen (sogenannte Lookup-Tables), um die Berechnungszeit zu verkürzen.

Des weiteren ist ein Verfahren zur Signaturbildung mit einer parallelen Arbeitsweise (Datenwort für Datenwort) bekannt. Dieses bekannte Verfahren arbeitet beispielsweise mit Hilfe eines Signaturregisters mit mehreren Eingängen (MISR; Multiple Input Shift Register). Durch die parallele Arbeitsweise können zum Beispiel mit einem 32 Bit-Prozessor 32 Bit Eingangsdaten in einem Schritt verarbeitet werden.

Gerade für Sicherheitsanwendungen in einem Kraftfahrzeug, wie beispielsweise Steer-by-Wire oder autonomes Fahren, werden fehlertolerante und damit redundante Elektroniksysteme eingesetzt, die einen hohen Bedarf an sicherem Datenaustausch zwischen Systemen, Steuergeräten und Recheneinheiten haben. Da bei diesen Systemen neben der Rechenzeit die Datenkommunikationszeit einen Engpass darstellt, bietet eine Verwendung des MISR-Verfahren zur Absicherung der vielen Datenkommunikationen einen entscheidenden Vorteil. Es reduziert die erforderliche Rechenzeit zur Absicherung der Datenkommunikation bei Sender und Empfänger auf ein Minimum. Bei den bekannten Verfahren kann es vorkommen, dass trotz einer fehlerhaften Datenübertragung in der Empfangseinheit eine fehlerfreie Signatur gebildet wird. Dies wird als Fehlermaskierung bezeichnet.

Dem gegenüber hat das erfindungsgemäße Verfahren den Vorteil, dass die Wahrscheinlichkeit einer Fehlermaskierung deutlich reduziert wird.

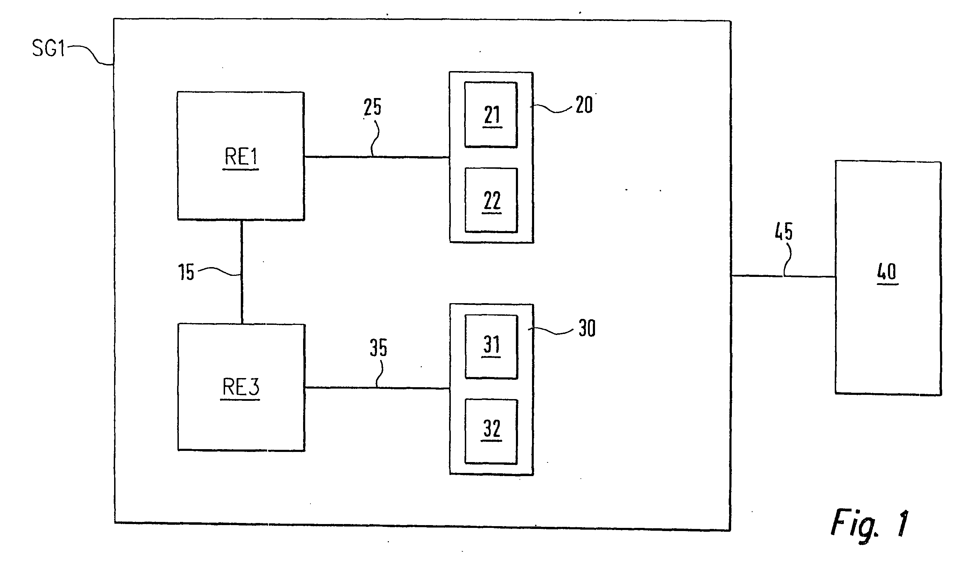

In Figur 1 ist ein Steuergerät SG1 zum Steuern und/oder Regeln einer Sicherheitsanwendung 40 dargestellt. Das erfindungsgemäße Verfahren ist beispielsweise als ein Computerprogramm realisiert, das auf den Recheneinheiten RE1, RE3 des Steuergeräts SG1 abläuft. Das Computerprogramm ist auf Speicherbereichen 21, 31 von Speicherelementen 20, 30 abgespeichert, wobei die Speicherbereiche 21, 31 als Nur-Lese-Speicher (ROM; Read Only Memory) ausgebildet sind. Zur Ausführung des Computerprogramms wird dieses über die Datenverbindungen 25, 35 an die Recheneinheiten RE1, RE3 übertragen. Ergebnisse von Berechnungen, die im Rahmen der Abarbeitung des Computerprogramms ermittelt werden, werden in umgekehrter Richtung über die Datenleitungen 25, 35 an die Speicherelemente 20, 30 übertragen und dort in den Speicherbereichen 22, 32 abgespeichert, die als Schreib-Lese-Speicher (RAM; Random Access Memory) ausgebildet sind.

Eine mögliche Arbeitsweise des Steuergeräts SG1 ist folgende:

Über die Datenleitung 45 erhält das Steuergerät SG1 Eingangsgrößen, die den Zustand der zu steuernden und/oder zu regelnden Sicherheitsanwendung 40 beschreiben. Diese Eingangsgrößen werden mindestens einer Recheneinheit RE1 zugeführt. Dort wird durch eine Ausführung des in dem Speicherbereich 21 abgespeicherten Computerprogramms eine erste Signatur der die Eingangsgrößen beschreibenden Daten erzeugt. Diese Daten werden dann zusammen mit der erzeugten ersten Signatur über die Datenleitung 15 an die Recheneinheit RE3 übertragen. Dort wird anhand der erhaltenen Daten eine zweite Signatur erzeugt und diese mit der von der Recheneinheit RE1 erhaltenen ersten Signatur verglichen. Stimmen beide Signaturen überein, so wird davon ausgegangen, dass die von der Recheneinheit RE1 übertragenen Daten und die von der Recheneinheit RE3 erhaltenen Daten übereinstimmen.

In einer anderen möglichen Arbeitsweise des Steuergeräts SG1 werden die Eingangsgrößen direkt beiden Recheneinheiten RE1, RE3 zugeführt. Beide Recheneinheiten RE1, RE3 bilden daraufhin eine jeweils erste Signatur, die die erhaltenen Eingangsgrößen charakterisieren. Über die Datenleitung 15 werden daraufhin die Signaturen zwischen den Recheneinheiten RE1, RE3 ausgetauscht. Die so empfangenen Signaturen werden dann mit der selbst erzeugten ersten Signatur in jeder der beiden Recheneinheiten RE1, RE3 verglichen. Stellt mindestens eine der Recheneinheiten RE1, RE3 fest, dass die selbst erzeugte erste Signatur und die von der jeweils anderen Recheneinheit empfangene Signatur nicht übereinstimmen, so veranlasst diese Recheneinheit, dass die entsprechende Anwendung oder das gesamte Steuergerät SG1 in einen definierten Ruhezustand versetzt wird (fail silent). Ein solcher Fehlerfall kann beispielsweise durch eine Störung der Datenleitung 15 auftreten oder durch eine Störung einer nicht dargestellten Datenleitung mit zugehöriger Logik, die die Eingangsgrößen innerhalb des Steuergerätes SG1 von einem Dateneingang zu den Recheneinheiten RE1, RE3 übermittelt.

Stimmen die Signaturen der Eingangsgrößen in beiden Recheneinheiten RE1, RE3 überein, wo werden diese Eingangsgrößen entsprechend der Steuer- und Regelaufgabe des Steuergerätes SG1 weiterverarbeitet. Dabei werden Ergebnisdaten erzeugt, die zur Steuerung und/oder Regelung der Sicherheitsanwendung 40 benötigt werden.

Anhand der in den Recheneinheiten RE1, RE3 erzeugten Ergebnisdaten wird in den Recheneinheiten RE1, RE3 jeweils eine erste Signatur erzeugt. Diese ersten Signaturen werden dann über die Datenleitung 15 mit der jeweils anderen Recheneinheit ausgetauscht. Jede Recheneinheit RE1, RE3 vergleicht daraufhin die so erhaltene Signatur mit der zuvor berechneten ersten Signatur. Stimmen beide Signaturen nicht überein, so wird davon ausgegangen, dass ein Übertragungsfehler der Signaturen oder ein Berechnungsfehler der Ergebnisdaten in mindestens einer Recheneinheit vorliegt und es werden entsprechende Maßnahmen (bspw. Neuberechnung oder fail silent) veranlasst.

Stimmen die selbst berechnete und die übertragene Signatur bei beiden Recheneinheiten RE1, RE3 überein, so veranlasst das Steuergerät SG1, dass diese Ergebnisdaten zur Steuerung der Sicherheitsanwendung 40 an diese mittels der Datenleitung 45 übertragen werden. Ebenfalls wird die dazugehörige Signatur als eine erste Signatur an die Sicherheitsanwendung 40 übermittelt. Dabei kann die Signatur als eigenständige Botschaft übermittelt werden oder über mehrere Botschaften verteilt werden, beispielsweise, wenn die durch die Signatur charakterisierten Ergebnisdaten selbst auch über mehrere Botschaften verteilt übermittelt werden. Somit wird das Datenvolumen der zu übertragenden Daten verringert und eine Störanfälligkeit der übertragenden Daten reduziert.

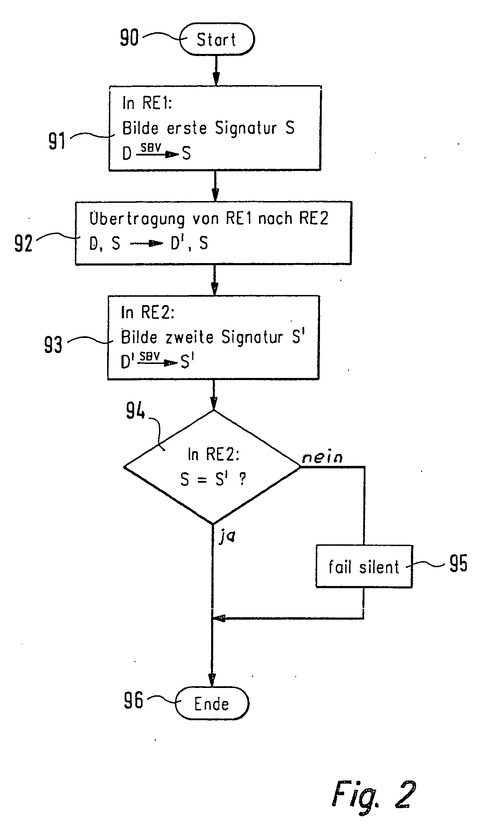

Figur 2 zeigt ein Ablaufdiagramm eines erfindungsgemäßen Verfahrens zur Signaturanalyse. Hierbei wird davon ausgegangen, dass eine Recheneinheit RE1 eines Steuergerätes SG1 einer anderen Recheneinheit RE2, die Bestandteil eines anderen Steuergerätes SG2 ist, Daten übermittelt und in der Recheneinheit RE2 mittels einer Signaturanalyse geprüft werden soll, ob ein Übertragungsfehler vorliegt.

Dazu wird in einem Schritt 90 das Verfahren gestartet. In einem Schritt 91 erzeugt die erste Recheneinheit RE1 in Abhängigkeit der zu übermittelnden Daten D eine erste Signatur S. Dazu wird ein vorgebbares Signaturbildungsverfahren SBV verwendet. In einem Schritt 92 werden diese Daten zusammen mit der ersten Signatur S mittels geeigneter Botschaften an die zweite Recheneinheit RE2 übermittelt. Dort wird in einem Schritt 93 anhand der übermittelten Daten D' ebenfalls gemäß des Signaturbildungsverfahrens SBV eine zweite Signatur S' erzeugt. In einem Abfrageschritt 94 werden in der Recheneinheit RE2 die Signaturen S, S' auf Übereinstimmung geprüft. Stimmen diese Signaturen S, S' überein, so wird davon ausgegangen, dass kein Übertragungsfehler vorliegt und das Verfahren in Schritt 96 beendet. Unterscheiden sich jedoch die Signaturen S, S', so wird auf eine Störung der Datenübertragung geschlossen und in einem Schritt 95 ein Verfahren gestartet, das die zugrunde liegende Sicherheitsanwendung in einen definierten Ruhezustand überführt (fail silent). Anschließend endet das Verfahren in Schritt 96.

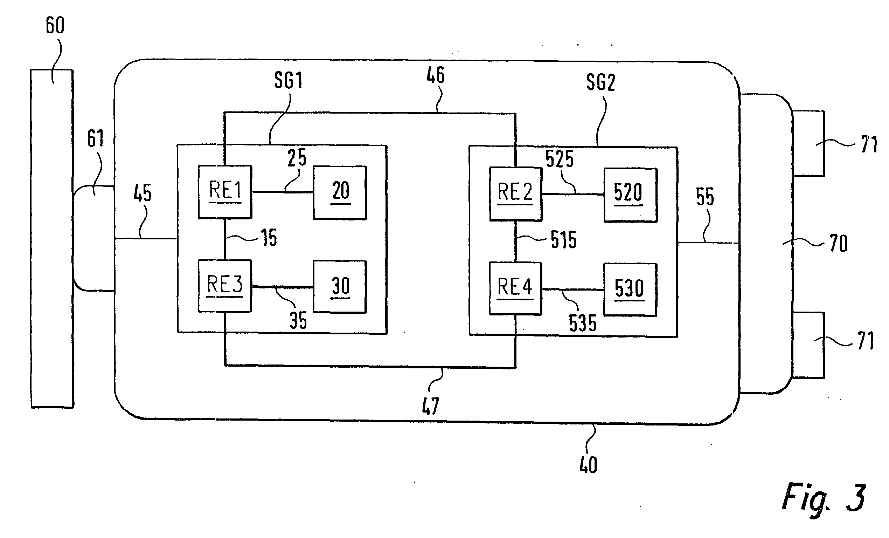

Figur 3 zeigt eine Sicherheitsanwendung 40, die mit zwei Steuergeräten SG1, SG2 betrieben wird. Dabei entsprechen die in Figur 1 vorhandenen Elemente den in Figur 3 dargestellten Elementen mit denselben Bezugszeichen. In Figur 3 ist zusätzlich das Steuergerät SG2 gezeigt, das zwei Recheneinheiten RE2, RE4 umfasst, die über eine Datenleitung 515 miteinander verbunden sind. Die Recheineinheit RE2 ist mittels einer Datenleitung 525 mit einem Speicherelement 520 und die Recheneinheit RE4 ist mittels einer Datenleitung 535 mit einem Speicherelement 530 verbunden. Außerdem ist die Recheneinheit RE1 des Steuergerätes SG1 mit der Recheneinheit RE2 des Steuergerätes SG2 über die Datenleitung 46 verbunden. Analog dazu verbindet die Datenleitung 47 die Recheneinheit RE3 mit der Recheneinheit RE4.

Ein Anwendungsbeispiel ist ein Steer-by-Wire System, bei dem mittels eines an einem Lenkrad 60 angebrachten Absolutwinkelgebers 61 ein Lenkwunsch eines Fahrers erkannt und mittels einer Datenleitung 45 dem Steuergerät SG1 zugeführt wird und durch das zweite Steuergerät SG2 eine hydraulische Lenkvorrichtung 70 gesteuert wird, die ein Einlenken der Räder 71 bewirkt.

Für die sichere Datenübertragung zwischen den Steuergeräten SG1, SG2 sind die beiden redundanten Datenleitungen 46, 47 beispielsweise als CAN, TTCAN oder FlexRay realisiert. Für eine Kommunikation zwischen Steuergerät SG1 und Steuergerät SG2 werden pro Regelzyklus mehrere Botschaften ausgetauscht, die beispielsweise Messgrößen, Stellgrößen und Statusinformationen enthalten.

Wird über die Datenleitung 45 ein Lenkbefehl übermittelt, so wird mit den dadurch übermittelten Daten wie in dem in Figur 1 beschriebenen Verfahren in den Recheneinheiten RE1, RE3 des Steuergerätes SG1 eine Signaturanalyse durchgeführt. Anschließend werden die Daten entsprechend von in den Speicherelementen 20, 30 abgespeicherten Computerprogrammen verarbeitet. Die damit erzeugten Ergebnisdaten werden wieder der bereits in Figur 1 dargestellten Signaturanalyse bezüglich der Recheneinheiten RE1, RE3 unterzogen. Wird dabei kein Übertragungs- oder Rechenfehler erkannt, so übermitteln die Recheneinheiten RE1, RE3 mittels der redundant ausgelegten Datenleitungen 46, 47 die Ergebnisdaten an die Recheneinheiten RE2, RE4 des Steuergeräts SG2. Dabei wird auch hier zusammen mit den Daten die entsprechende erste Signatur übermittelt.

Die Recheneinheiten RE2, RE4 bilden nun ihrerseits unabhängig voneinander anhand der jeweils erhaltenen Daten eine zweite Signatur und vergleichen diese mit der übermittelten ersten Signatur, um eine Störung der Daten während der Übertragung von dem Steuergerät SG1 zu dem Steuergerät SG2 zu erkennen.

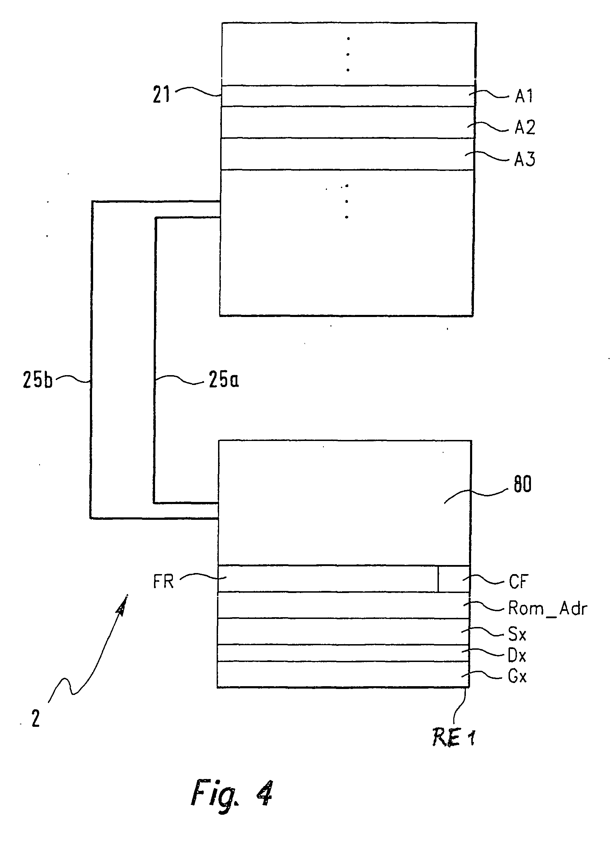

In Figur 4 ist ein Rechnersystem 2 schematisch dargestellt, das eine Recheneinheit RE1 und einen Nur-Lese-Speicher 21 umfasst. Die Recheneinheit RE1 umfasst eine sogenannte ALU (Arithmetic-Logic-Unit) 80 und mehrere Register FR, Rom_Adr, Sx, Dx, Gx zur Speicherung von Adressen und Daten. Außerdem verfügt die Recheneinheit RE1 über ein sogenanntes Carry-Flag CF, das durch einen 1-bit breiten Bereich des Flag-Registers FR realisiert ist. Über eine Adressleitung 25a und eine Datenleitung 25b sind die Recheneinheit RE1 und der Nur-Lese-Speicher 21 verbunden. Der Nur-Lese-Speicher 21 umfasst adressierbare Bereiche zur Speicherung von Daten, von denen aus Gründen der Übersichtlichkeit in Figur 4 nur drei Bereiche dargestellt und mit den Bezugszeichen A1, A2, A3 versehen sind.

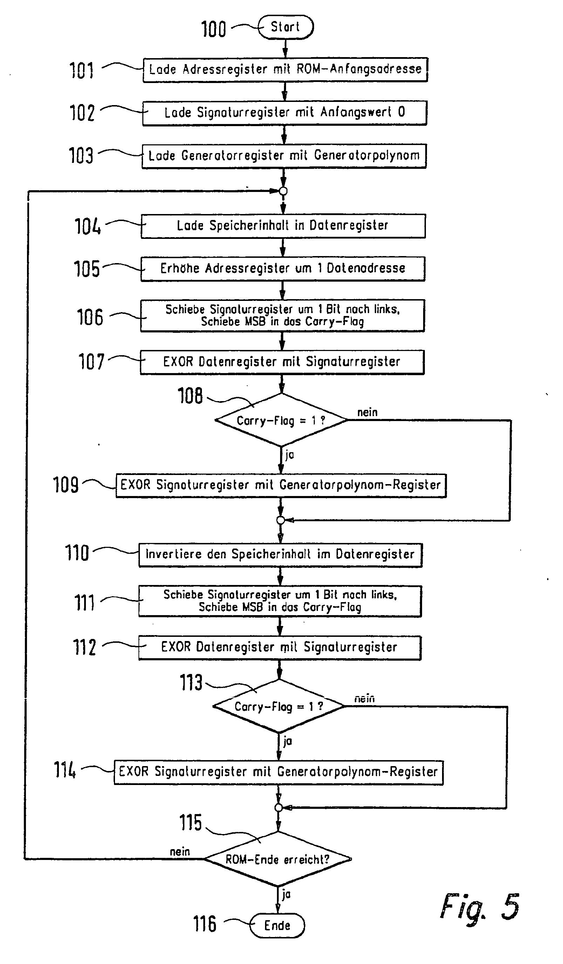

Eine auf dem Rechnersystem 2 ablaufende Signaturbildung, eines erfindungsgemäßen Verfahrens, wie es beispielsweise in den Figuren 1, 3 dargestellt ist, ist mittels eines Ablaufdiagramms in Figur 5 beschrieben. Das Verfahren beginnt in einem Schritt 100. In einem Schritt 101 wird ein Adressregister Rom_Adr mit einer Adresse geladen, die auf einen adressierbaren Bereich A1 des Nur-Lese-Speichers 21 verweist. In einem Schritt 102 wird ein Signaturregister Sx mit dem Wert null initialisiert. Das Verfahren ist so ausgelegt, das sich bei Beenden des Verfahrens in dem Signaturregister Sx die berechnete Signatur befindet. In einem Schritt 103 wird ein Generatorpolynom, das geeignet ist, über einer Menge von Daten eine diese Daten charakterisierende Signatur zu bilden, in das Register Gx geladen.

In einem Schritt 104 wird der Speicherinhalt A1, der sich unter der in dem Adressregister Rom_Adr gespeicherten Adresse in dem Nur-Lese-Speicher 21 befindet, in das Register Dx der Recheneinheit RE1 geladen. Dazu wird die in dem Register Rom_Adr gespeicherte Adresse, die beispielsweise auf den Speicherbereich A1 verweist, über die Adressleitung 25a dem Nur-Lese-Speicher 21 übermittelt. Dieser sendet dann die sich in dem entsprechenden Speicherbereich A1 befindlichen Daten mittels der Datenleitung 25b an die Recheneinheit RE1, wo sie in dem Register Dx abgelegt werden. Das Adressregister Rom_Adr wird daraufhin in einem Schritt 105 um eine Datenadresse erhöht.

In einem Schritt 106 wird der Inhalt des Signaturregisters Sx um eine Stelle (entspricht einem Bit) nach links verschoben (left-shift). Dabei wird eine Schreibweise für Binärdaten zugrunde gelegt, bei der das höchstwertige Bit, das sogenannte MSB (Most Significant Bit), stets links notiert wird. Dieser left-shift innerhalb des Signaturregisters Sx bewirkt, dass das MSB aus dem entsprechenden Datenwort herausfällt und in dem Carry-Flag CF abgelegt wird.

In einem Schritt 107 wird mittels der ALU 80 ein EXOR-Operator auf das Datenregister Dx und das Signaturregister Sx angewendet und das Ergebnis in dem Signaturregister Sx abgelegt. In einem Abfrageschritt 108 wird überprüft, ob der in dem Carry-Flag CF abgelegte Wert MSB gleich 1 ist. Ist dies nicht der Fall, so wird zu einem Schritt 110 verzweigt. Gilt aber MSB = 1, so wird in einem Schritt 109 das in dem Register Gx abgelegte Generatorpolynom von dem aktuellen Wert des Signaturregisters Sx subtrahiert, was mittels einer EXOR-Operation in der ALU 80 erreicht wird.

In dem folgenden Schritt 110 wird nun der Inhalt des Datenregisters Dx invertiert. Daraufhin wird in dem Schritt 111 der Inhalt des Signaturregisters Sx erneut um ein Bit nach links geschoben und das herausfallende Bit wird dabei als MSB in dem Carry-Flag CF abgelegt, wobei der bisher dort gespeicherte Wert überschrieben wird. In Schritt 112 wird mittels der ALU 80 der EXOR-Operator wieder auf das Datenregister Dx und das Signaturregister Sx angewendet und das Ergebnis in dem Signaturregister Sx abgelegt.

In einem Abfrageschritt 113 wird analog zu Schritt 108 überprüft, ob der in dem Carry-Flag CF abgelegte Wert MSB gleich eins ist. Ist dies nicht der Fall, so wird zu einem Abfrageschritt 115 verzweigt. Gilt aber MSB = 1, so wird in einem Schritt 114 das in dem Register Gx abgelegte Generatorpolynom von dem aktuellen Wert des Signaturregisters Sx subtrahiert, was wieder mittels der EXOR-Operation in der ALU 80 erreicht wird.

In dem Abfrageschritt 115 wird überprüft, ob ein Ende des Datenwortes, über das die Signatur gebildet wird, bereits erreicht ist. Ist dies nicht der Fall, so wird das Verfahren an dem Schritt 104 fortgesetzt. Ist das Ende des Datenwortes erreicht, so endet das Verfahren, wobei sich nun in dem Signaturregister Sx die erzeugte Signatur befindet.

Das erfindungsgemäß vorgeschlagene Software-Verfahren zur Signaturbildung arbeitet nach dem sogenannten MISR (Multiple-Input Signature Register)-Verfahren. Es bildet das an sich in Hardware bekannte Verfahren in Software ab.

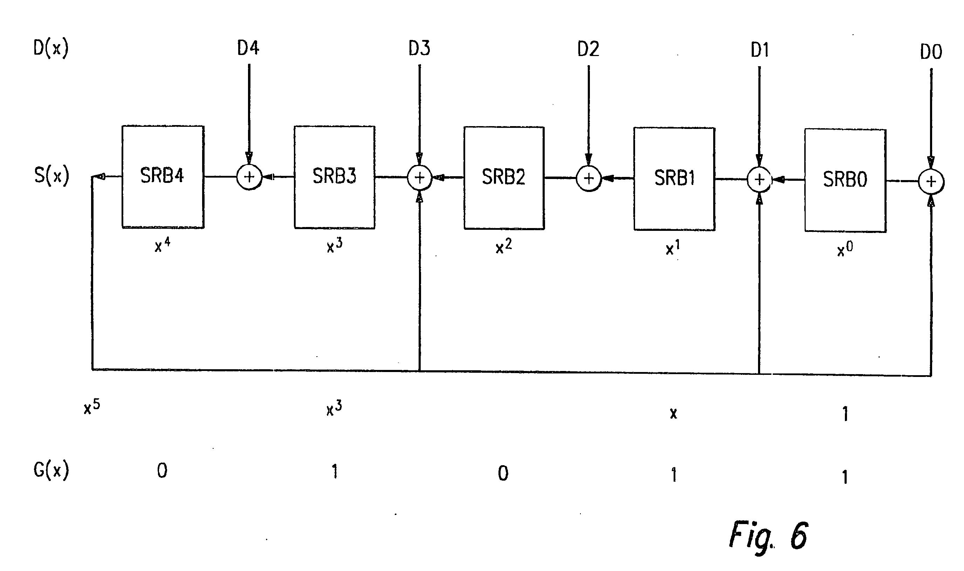

In Figur 6 ist ein Funktionsprinzip des MISR-Verfahrens in Hardware für Datenworte von 5 Bit Breite (DO bis D4) dargestellt. SRB0 bis SRB4 stellen 5 Bitspeicher (Flipflops) des rückgekoppelten Schieberegisters zur Signaturbildung dar. An jedem Bitspeicher-Eingang sitzt ein Modulo-2-Addierer (+) mit zwei oder drei Eingängen. An dem ersten Eingang des Addierers liegt ein Bit des zu komprimierenden Datenwortes D ($D_i$), an dem zweiten Eingang liegt der Ausgang des davor liegenden Bitspeichers SRB ($SRB_{i-1}$) und an dem dritten Eingang liegt gegebenenfalls der Ausgang des höchsten Bitspeichers $SRB_4$ des Schieberegisters.

In dem vorliegenden Fall, indem die Datenworte binär codiert sind, wird durch einen Modulo-2-Addierer der Rest der Division $(D_i + SRB_{i-1} + SRB_4)/2$ beziehungsweise der Division $(D_i + SRB_{i-1})/2$ gebildet. Das gesamte Signaturregister Sx bildet ebenfalls einen Restwert. Der gesamte Eingangsdatenblock, der aus Datenworten mit einer Länge von 5 Bit besteht, kann vereinfacht als ein sequentieller Datenstrom betrachtet werden, der durch einen Wert, das Divisor-Polynom, dividiert wird. Der Rest dieser Division befindet sich anschließend in dem Signaturregister Sx.

Mathematisch kann die Arbeitsweise von Signaturregistern durch die Polynomdarstellung von Binärzahlen beschrieben werden. Für die Polynomdarstellung einer Binärzahl werden die 1-Ziffern in der Binärzahl durch entsprechende Terme $x^n$ ersetzt, wobei der Exponent n der Stellen-Wertigkeit der entsprechenden 1 entspricht. Dem Divisorpolynom $G(x)=x^5+x^3+x^1+x^0$ in Figur 6 entspricht die Binärzahl 101011. Da ein Divisorpolynom außer zur Datenkomprimierung auch zur Datengeneration verwendet werden kann, wird das Divisorpolynom auch Generatorpolynom G(x) genannt. Ebenso kann der Eingangsdatenstrom als Polynom D(x) und der Inhalt des Signaturregisters als Polynom S(x) dargestellt werden.

In dem Signaturregister Sx wird die Division durch das Divisorpolynom durch wiederholte Subtraktion des Divisorpolynom-Wertes von dem Schieberegister-Inhalt vorgenommen. Jedes mal wenn aus dem höchsten Bitspeicher SRB4 der Wert 1 herausgeschoben wird und somit in einem längeren Schieberegister der Term $x^5$ in dem nicht vorhandenen Bitspeicher SRB5 (entsprechend dem Carry-Flag CF in Figur 4, 5) gesetzt würde, wird der in dem Schieberegister gespeicherte Wert um $x^5+x^3+x^1+x^0$ verringert. Das Herausschieben aus SRB4 verringert um $x^5$, die Rückkopplung über die Modulo-2-Addierer verringert den Schieberegister-Wert um $x^3+x^1+x^0$, weil die Modulo-2-Addition in diesem Fall einer Modulo-2-Subtraktion entspricht. Die Hardware-Darstellung des Divisorpolynoms wird durch die Rückkopplungspfade von dem höchsten Bit des Schieberegisters zu den Modulo-2-Addierern gebildet.

In Figur 6 sind die Modulo-2-Addierer vor folgenden Bitspeichern mit SRB4 verbunden: SRB3, SRB1, SRB0. Das zugehörige Polynom lautet $x^5+x^3+x^1+x^0$. Der Term $x^5$ mit dem Exponent 5 (entsprechend der Länge des Schieberegisters + 1) ist enthalten, weil das höchstwertige Bit MSB hinausgeschoben und damit subtrahiert wird. Mathematisch lässt sich zeigen, dass der in dem Signaturregister verbleibende Rest dem Rest entspricht, der durch die Division des Datenstroms D(x) durch das Generatorpolynom G(x) entsteht.

Nachfolgend wird mittels einer rekursiven Funktion gezeigt, welche mathematischen Operationen zur Bildung der Signatur S(x) in dem Signaturregister erforderlich sind. Es bezeichnet:

| | |
|---|---|
| $S_i(x)$ : | aktueller Wert des Signaturregisters; |
| $S_{i+i}(x)$ : | nächster Wert des Signaturregisters nach der Verarbeitung das Datenworts; und |
| $D_i(x)$: | aktueller Wert des Datenregisters. |

Die Signatur nach dem i-ten Verarbeitungszyklus ist dann:

$$S_{i+1}(x) = \left[D_i(x) + xS_i(x)\right] \bmod G(x)$$

Die Multiplikation der Signatur Si(x) mit x stellt das Schieben des Schieberegisters um eine Bitposition nach links dar (left shift). Das Zeichen "+" ist eine Modulo-2-Addition beziehungsweise Subtraktion des Signaturregisters mit dem aktuellen Datenwort. Der Begriff modG (x) bedeutet, dass in dem Signaturregister immer der Rest bezüglich der Division S(x)/G(x) steht. Dies wird in der Hardware-Lösung, wie schon beschrieben, dadurch erreicht, dass immer dann, wenn das höchste Bit in dem Schieberegister = 1 ist, das Generatorpolynom G(x) von dem Wert $S_i(x)$ des Schieberegisters abgezogen wird.

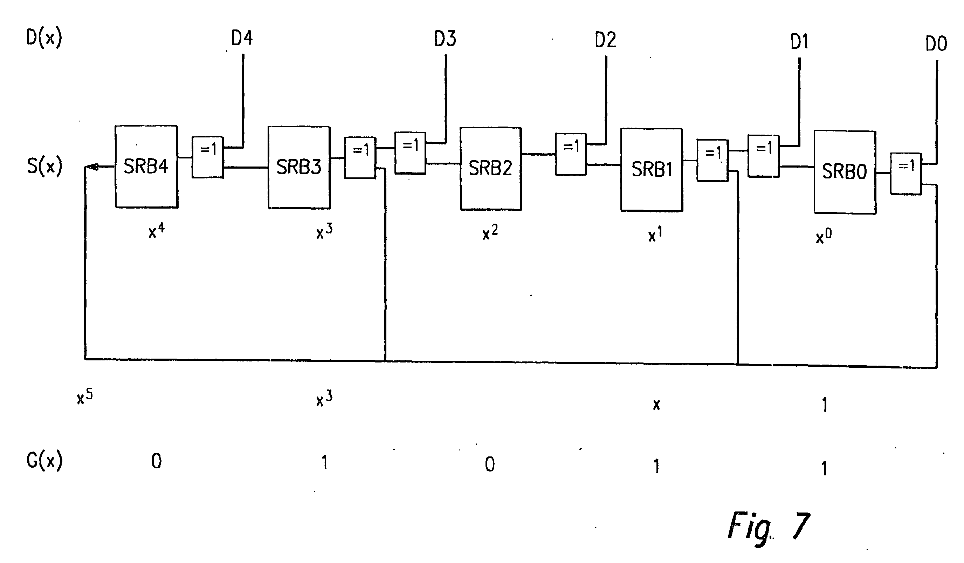

Bei einer Software-Realisierung des MISR-Verfahrens, wie es beispielsweise in Figur 5 dargestellt ist, können die Modulo-2-Addierer gemäß Figur 7 als EXOR-Operationen realisiert sein. An den Stellen, wo zwei Bits zu addieren sind, ist eine EXOR-Operation vorgesehen, an den Stellen, wo drei Bits zu addieren sind, wird dies durch zwei aufeinanderfolgende EXOR-Operationen durchgeführt. Die Hardware-Darstellung kann in Software umgesetzt werden, indem folgende Schritte für jedes zu verarbeitende Datenwort D durchgeführt werden.

1. Der Anfangsinhalt des Signaturregisters sei 00000.
2. Schiebe den Inhalt des Signaturregisters um eine Position nach links. Mathematisch bedeutet dies die Multiplikation des Signaturregisterwertes mit x, also $S_{i+1}(x) = xS_i(x)$.
3. Bilde EXOR aus aktuellem einzulesendem Datenwert Di(x) und dem Inhalt des Signaturregisters S (x), also $S_{i+1}(x)=D_i(x)+xS_i(x)$
4. Falls SRB4=1: Bilde EXOR aus Signaturregister S(x) und Generatorpolynom G(x). Damit ist $S_{i+1}(x) = S_{i+1}(x)+G(x) = [D_i(x)+xS_i(x)]\bmod G(x)$.

Die beschriebenen Signaturbildung über einen ROM-Speicher kann auf jedem beliebigen Rechengerät realisiert werden. Wie bereits erwähnt, werden zur Realisierung dieses Signaturbildungsverfahrens auf einem Prozessor vier Register benötigt:

| | |
|---|---|
| ROM_Adr | als Adressregister für das ROM; |
| Dx | als Register für das aktuelle zu verarbeitende Datenwort; |
| Sx | als Signaturregister; und |
| Gx | als Register für die Speicherung des Generatorpolynoms. |

Der symbolische Programmablauf in Assembler ist dann wie folgt:

| | |
|---|---|
| Start: | Lade ROM_Adr mit Anfangsadresse des ROM |
| Init: | Lade Sx mit 0 ($S_0(x)=0$) |
| | Lade Gx mit Generatorpolynom |
| Loop: | Lade Dx mit Inhalt von ROM_Adr |
| | Erhöhe ROM_Adr um 1 |

| | |
|---|---|
| MISR: | Schiebe Sx um 1 Bit nach links, höchstes Bit in Carry-Bit (xS(x)) |
| | Bilde EXOR Dx mit Sx (D(x)+xS(x)) |
| | Wenn Carry-Bit gesetzt, bilde EXOR Sx mit Gx ([D(x)+xS(x)]modG(x)) |
| | Vergleiche ROM_Adr mit Endadresse ROME |
| | Wenn ungleich, gehe zu Loop |

### Patentansprüche

1. Verfahren zur Übertragung von Daten (D) zwischen zwei Recheneinheiten (RE1; RE3), bei dem in der ersten Recheneinheit (RE1) nach einem vorgebbaren Signaturbildungsverfahren (SBV) eine erste Signatur (S) in Abhängigkeit der zu übertragenden Daten (D) gebildet wird, und die erste Signatur (S) zusammen mit den Daten (D) an die zweite Recheneinheit (RE3) in Botschaften übertragen wird, wo eine zweite Signatur (S') nach dem Signaturbildungsverfahren in Abhängigkeit von den übertragenen Daten (D') gebildet wird und die erste Signatur (S) mit der zweiten Signatur (S') verglichen wird, **dadurch gekennzeichnet, dass** in der ersten Recheneinheit (RE1) die zu übertragenden Daten (D) invertiert werden und die erste Signatur (S) nach dem vorgebbaren Signaturbildungsverfahren (SBV) in Abhängigkeit der zu übertragendenden Daten (D) und der invertierten Daten ($D_i$) gebildet wird, und daß in der zweiten Recheneinheit (RE3) die übertragenen Daten (D') invertiert werden wo in Abhängigkeit dieser invertierten Daten ($D_i$') und der übertragenen Daten (D') nach dem Signaturbildungsverfahren (SBV) die zweite Signatur (S') gebildet wird und wo die erste Signatur (S) mit der zweiten Signatur (S') verglichen wird.

**2.** Verfahren nach Anspruch 1, **dadurch gekennzeichnet, dass** mittels eines Signaturregisters (Sx) mit mehreren Eingängen (MISR; Multiple Input Shift Register) die erste Signatur (S) und/oder die zweite Signatur (S') bit-parallel (wortweise) gebildet werden.

**3.** Verfahren nach Anspruch 1 oder 2, **dadurch gekennzeichnet, dass** die erste Signatur (S) und/oder die zweite Signatur (S') über mehrere Botschaften gebildet werden.

**4.** Verfahren nach Anspruch 3, **dadurch gekennzeichnet, dass** eine Signatur (S) auf mehrere Botschaften verteilt übertragen wird.

**5.** Verfahren nach einem der Ansprüche 1 bis 4, wobei die zu übertragenden Daten (D) bitgenaue Eingangsdaten sind, die beispielsweise in Botschaften über Datenbusse zu den Recheneinheiten gelangen, oder Berechnungsergebnisse sind, die parallel auf mehreren Rechnern redundant erzeugt werden, **dadurch gekennzeichnet, dass** zur Überprüfung einer Übereinstimmung dieser Daten (D) lediglich die entsprechenden Signaturen (S) übertragen werden.

**6.** Verwendung eines Verfahrens nach einem der Ansprüche 1 bis 5, **dadurch gekennzeichnet, dass** das Verfahren zur Überprüfung des Inhaltes eines Speicherbereiches eines Nur-Lese-Speichers (21), Flash-Speichers oder eines Schreib-Lese-Speichers (22) eingesetzt wird.

**7.** Verwendung nach Anspruch 6 **dadurch gekennzeichnet, dass** die Daten (D) des zu überprüfenden Speicherinhaltes invertiert werden, nach dem vorgebbaren Signaturbildungsverfahren (SBV) in Abhängigkeit der zu überprüfenden Daten (D) und der invertierten Daten ($D_i$) eine erste Signatur (S) gebildet und in einem Speicherbereich eines Nur-Lese-Speichers (21), Flash-Speichers oder eines Schreib-Lese-Speichers (22) als eine Sollsignatur abgespeichert wird und dass für eine Überprüfung der sich in dem zu überprüfenden Speicherbereich befindlichen Daten (D'), die Daten (D') invertiert werden, in Abhängigkeit dieser invertierten Daten ($D_i$') und der Daten (D') nach dem Signaturbildungsverfahren (SBV) die zweite Signatur (S') gebildet wird und mit der Sollsignatur (S) verglichen wird.

**8.** Computerprogramm, das auf einem Rechengerät oder einem Steuergerät (SG1, SG2), oder auf einer Recheneinheit (RE1, RE2, RE3, RE4), ablauffähig ist, wobei gemäß das Computerprogramm Verfahren einem der Ansprüche 1 bis 5 ausführt.

**9.** Computerprogramm nach Anspruch 8, **dadurch gekennzeichnet, dass** das Computerprogramm auf einem Speicherelement ((20, 30), insbesondere auf einem Schreib-Lese-Speicher mit wahlfreiem Zugriff (RAM; Random-Access-Memory) (22, 32), einem Nur-Lese-Speicher (ROM; Read-Only-Memory) (21, 31) oder einem Flash-Speicher (Flash-Memory), abgelegt ist.

**10.** Steuergerät (SG1) für ein Kraftfahrzeug, umfassend mindestens eine Recheneinheit (RE1) und mindestens ein Speicherelement (20), auf dem ein Computerprogramm abgelegt ist, das auf der Recheneinheit (RE1) ablauffähig ist, **dadurch gekennzeichnet, dass** das Steuergerät (SG1) ein Verfahren nach einem der Ansprüche 1 bis 5 ausführt, wenn das Computerprogramm auf der Recheneinheit (RE1) abläuft.

## Claims

**1.** Method for transmitting data (D) between two arithmetic units (RE1; RE3), in which a first signature (S) is formed in the first arithmetic unit (RE1) in accordance with a prescribable signature formation method (SBV) on the basis of the data (D) to be transmitted, and the first signature (S) is transmitted, together with the data (D), in messages to the second arithmetic unit (RE3) where a second signature (S') is formed in accordance with the signature formation method on the basis of the transmitted data (D'), and the first signature (S) is compared with the second signature (S'), **characterized in that**, in the first arithmetic unit (RE1), the data (D) to be transmitted are inverted and the first signature (S) is formed in accordance with the prescribable signature formation method (SBV) on the basis of the data (D) to be transmitted and the inverted data ($D_i$), and **in that**, in the second arithmetic unit (RE3), the transmitted data (D') are inverted and the second signature (S') is formed in accordance with the signature formation method (SBV) on the basis of these inverted data ($D_i$') and the transmitted data (D') and the first signature (S) is compared with the second signature (S').

**2.** Method according to Claim 1, **characterized in that** the first signature (S) and/or the second signature (S') is/are formed in a bit-parallel manner (word by word) using a signature register (Sx) having a plurality of inputs (MISR; Multiple Input Signature Register).

**3.** Method according to Claim 1 or 2, **characterized in that** the first signature (S) and/or the second signature (S') is/are formed using a plurality of messages.

**4.** Method according to Claim 3, **characterized in that** a signature (S) is transmitted in such a manner that it is distributed among a plurality of messages.

**5.** Method according to one of Claims 1 to 4, the data (D) to be transmitted being bit-accurate input data, which, for example, are passed to the arithmetic units in messages via data buses, or calculation results which are redundantly generated in a parallel manner on a plurality of computers, **characterized in that** only the corresponding signatures (S) are transmitted in order to check that these data (D) match.

**6.** Use of a method according to one of Claims 1 to 5, **characterized in that** the method is used to check the contents of a memory area of a read-only memory (21), a flash memory or a random access memory (22).

**7.** Use according to Claim 6, **characterized in that** the data (D) of the memory contents to be checked are inverted, a first signature (S) is formed in accordance with the prescribable signature formation method (SBV) on the basis of the data (D) to be checked and the inverted data ($D_i$) and is stored as a desired signature in a memory area of a read-only memory (21), a flash memory or a random access memory (22), and **in that**, in order to check the data (D') in the memory area to be checked, the data (D') are inverted, the second signature (S') is formed in accordance with the signature formation method (SBV) on the basis of these inverted data ($D_i$') and the data (D') and is compared with the desired signature (S).

**8.** Computer program which can be executed in a computing unit or a control unit (SG1, SG2) or in an arithmetic unit (RE1, RE2, RE3, RE4), the computer program carrying out a method according to one of Claims 1 to 5.

**9.** Computer program according to Claim 8, **characterized in that** the computer program is stored in a memory element (20, 30), in particular in a random access memory (RAM) (22, 32), a read-only memory (ROM) (21, 31) or a flash memory.

**10.** Control unit (SG1) for a motor vehicle, said control unit comprising at least one arithmetic unit (RE1) and at least one memory element (20) in which a computer program which can be executed in the arithmetic unit (RE1) is stored, **characterized in that** the control unit (SG1) carries out a method according to one of Claims 1 to 5 when the computer program is executed in the arithmetic unit (RE1).

## Revendications

**1.** Procédé de transmission de données (D) entre deux unités de calcul (RE1 ; RE3) selon lequel
dans la première unité de calcul (RE1) on forme une première signature (S) selon un procédé de formation de signature prédéfini (SBV) en fonction des données (D) à transmettre et on transmet la première signature (S) avec les données (D) à la seconde unité de calcul (RE3) dans des messages,
on forme une seconde signature (S') selon le procédé de formation de signature en fonction des données à transmettre (D') et on compare la première signature (S) à la seconde signature (S'),
**caractérisé en ce qu'**
on inverse les données à transmettre (D) dans la première unité de calcul (RE1) et on forme la première signature (S) selon le procédé de formation de signature, prédéfini (SBV) en fonction des données à transmettre (D) et des données inversées ($D_i$),
et dans la seconde unité de calcul (RE3) on inverse les données transmises (D') et en fonction de ces données inversées ($D_i$') et des données transmises (D'), on forme la seconde signature (S') selon le procédé de formation de signature (SBV), et on compare la première signature (S) à la seconde signature (S').

**2.** Procédé selon la revendication 1,
**caractérisé en ce qu'**
à l'aide d'un registre de signatures (Sx) à plusieurs entrées (registre à décalage à entrées multiples MISR) on forme la première signature (S) et/ou la seconde signature (S') en bits parallèles (mot par mot).

**3.** Procédé selon la revendication 1 ou 2,
**caractérisé en ce qu'**
on forme la première signature (S) et/ou la seconde signature (S') sur plusieurs messages.

**4.** Procédé selon la revendication 3,
**caractérisé en ce qu'**
on transmet une signature (S) en la répartissant entre plusieurs messages.

**5.** Procédé selon l'une des revendications 1 à 4, selon lequel les données (D) à transmettre sont des données d'entrée à la précision du bit, qui arrivent par exemple dans des messages transmis par des bus de données vers les unités de calcul ou sont les résultats de calculs générés de manière redondante en parallèle dans plusieurs calculateurs,
**caractérisé en ce que**
on transmet uniquement les signatures correspondantes (S) pour vérifier une concordance des données (D).

**6.** Application d'un procédé selon l'une des revendications 1 à 5,
**caractérisée en ce qu'**
on utilise le procédé pour vérifier le contenu d'une zone de mémoire dans une mémoire morte (21), une mémoire flash ou une mémoire vive (22).

**7.** Application selon la revendication 6,
**caractérisée en ce qu'**
on inverse les données (D) du contenu de mémoire à vérifier, on forme une première signature (S) selon le procédé de formation de signature prédéfini (SBV) en fonction des données (D) à vérifier et des données inversées ($D_i$) et on la mémorise dans une zone de mémoire d'une mémoire morte (21), d'une mémoire flash ou d'une mémoire vive (22) comme signature de consigne et pour vérifier les données (D') qui se trouvent dans la plage de mémoire à vérifier, on inverse ces données (D'), et en fonction des données ($D_i$') ainsi inversées et des données (D') on forme la seconde signature (S') selon le procédé de formation de signature (SBV) et on la compare à la signature de consigne (S).

**8.** Programme d'ordinateur exécuté dans un appareil de calcul ou un appareil de commande (SG1, SG2) ou dans une unité de calcul (RE1, RE2, RE3, RE4), ce programme d'ordinateur exécutant un procédé selon l'une des revendications 1 à 5.

**9.** Programme d'ordinateur selon la revendication 8,
**caractérisé en ce qu'**
il est enregistré dans un élément de mémoire (20, 30), notamment dans une mémoire vive à accès libre (RAM ; Mémoire à accès aléatoire) (22, 32), une mémoire morte (ROM ; Mémoire à lecture seule) (21, 31) ou une mémoire flash.

**10.** Appareil de commande (SG1) pour un véhicule automobile comprenant au moins une unité de calcul (RE1) et au moins un élément de mémoire (20) dans lequel est inscrit un programme d'ordinateur exécuté par l'unité de calcul (RE1),
**caractérisé en ce que**
l'appareil de commande (SG1) exécute un procédé selon l'une des revendications 1 à 5 lorsque le programme est effectué par l'unité de calcul (RE1).

40
45
20
21
22
30
31
32
25
35
RE1
RE3
15
SG1

Fig. 1

90
Start
91
In RE1:
Bilde erste Signatur S
D SBV S
92
Übertragung von RE1 nach RE2
D, S D', S
93
In RE2:
Bilde zweite Signatur S'
D' SBV S'
94
In RE2:
S = S' ?
nein
ja
fail silent
95
96
Ende

Fig. 2

71
70
71
55
520
530
SG2
525
515
535
RE2
RE4
40
46
47
20
30
SG1
25
15
35
RE1
RE3
45
61
60

Fig. 3

21
A1
A2
A3
25b
25a
80
FR
CF
Rom_Adr
Sx
Dx
Gx
2
RE 1

Fig. 4

100
Start
101
Lade Adressregister mit ROM-Anfangsadresse
102
Lade Signaturregister mit Anfangswert 0
103
Lade Generatorregister mit Generatorpolynom
104
Lade Speicherinhalt in Datenregister
105
Erhöhe Adressregister um 1 Datenadresse
106
Schiebe Signaturregister um 1 Bit nach links, Schiebe MSB in das Carry-Flag
107
EXOR Datenregister mit Signaturregister
108
Carry-Flag = 1 ?
nein
ja
109
EXOR Signaturregister mit Generatorpolynom-Register
110
Invertiere den Speicherinhalt im Datenregister
111
Schiebe Signaturregister um 1 Bit nach links, Schiebe MSB in das Carry-Flag
112
EXOR Datenregister mit Signaturregister
113
Carry-Flag = 1 ?
nein
ja
114
EXOR Signaturregister mit Generatorpolynom-Register
115
nein
ROM-Ende erreicht?
ja
116
Ende

*Fig. 5*

D(x)
S(x)
G(x)
D0
D1
D2
D3
D4
SRB0
SRB1
SRB2
SRB3
SRB4
x0
x1
x2
x3
x4
x5
1
x
x3
1
1
0
1
0

Fig. 6

D(x)
S(x)
G(x)
D0
D1
D2
D3
D4
SRB0
SRB1
SRB2
SRB3
SRB4
=1
x0
x1
x2
x3
x4
x5
1
x
x3
1
1
0
1
0

Fig. 7